# EUROPEAN PATENT APPLICATION

(11) **EP 4 556 888 A1**
(43) Date of publication of application: **21.05.2025**
(21) Application number: 23220649.0
(22) Date of filing: 28.12.2023
(51) Int. Cl.: G01N 21/15, G01N 21/47, G01N 21/94

(54) **AN AUTOMATED METHOD FOR DETERMINING A CONDITION OF AN OPTICAL SYSTEM**

(30) Priority: 20.11.2023 PT 2023119058
(71) Applicant: ILOF- Intelligent Lab on Fiber, LDA, 4450-007 Matosinhos (PT)
(72) Inventor: GERSEN, Henkjan, 4450-007 MATOSINHOS (PT); TURPIN AVILÉS, Alejandro, 4450-007 MATOSINHOS (PT); MANCOO, Allan, 4450-007 MATOSINHOS (PT); DE JESUS GOUVEIA, Carlos Avelino, 4450-007 MATOSINHOS (PT)
(74) Representative: do Nascimento Gomes, Rui

(57) **Abstract**

The present disclosure refers to optical system condition monitoring, including an automated method for determining a condition of an optical system, the condition comprising the presence of contamination in the optical system or the quality of focus of the optical system, the optical system comprising means for providing a sample and optical means, and being configured to produce a backscattering or forward scattering signal upon illumination.

## Description

### TECHNICAL FIELD

The present disclosure is enclosed in the area of optical system condition monitoring, including an automated method for determining a condition of an optical system, the condition comprising the presence of contamination in the optical system or the quality of focus of the optical system, the optical system comprising means for providing a sample and optical means, and being configured to produce a backscattering or forward scattering signal upon illumination.

### BACKGROUND OF THE INVENTION

Measurements of complex samples play an important role in optical imaging, for instance applicable to process monitoring and diagnostic devices. Due to the sensitivity and specificity of optical methods, many of such measurements are performed by optical means in which light is focused by an optical element into the sample and collected by that same or another, second, optical element. To achieve long term reliable optical measurements, the ability to automatically determine the quality of these optical signals is essential for the automated collection of robust and reliable information, particularly for complex fluid samples, such as biological samples, and for high throughput.

A challenge arises in obtaining long term, reliable and reproducible optical measurements, particularly when dealing with complex fluid samples and complex fluid samples, including bodily based fluids or pharmaceutical solutions. Such challenge relates to optical surfaces being directly exposed to the sample of interest, leading to potential contamination of the optical means, as it is needed a measure of how contaminated the optical means may be.

Moreover, potential contamination has led to a focus on cleaning, which in turn leads to potential degradation of the optical means. This is especially relevant when the intrinsic material properties of optical means elements are rather sensitive - as is the case of Polydimethylsiloxane (PDMS) - often used in microfluidic applications. Here, the presence of nanoparticulates, nonspecific adsorption of (biological) matter on optical surfaces and intrinsic changes of surface chemistry are major challenges which are typically overcome by single use sample-containers or measurement devices. However, the inability to reuse the unit holding the sample directly impacts the reproducibility and repeatability of the collected optical signals.

A focus is thus made on reusable devices. As referred, the use of cleaning agents can remove most of the (biological) contaminants, as is the case of the agents used to clean endoscopic probes. However, for quality control, the outcome of such a cleaning step still needs to (a) be continuously validated to ensure that cross-contamination from one sample to the next is avoided and (b) that the optical signals obtained are reproducible and reliable throughout long term measurements.

For many applications, this inspection is done by visual means or through microscopy as more sophisticated detection techniques to detect contaminants are typically too expensive, complex, slow and labour intensive for high throughput measurements.

Moreover, automated validation of the cleanliness of the sample analysis unit in a low-resource setting prior to each individual sample measurement is particularly relevant, to guarantee the desired quality of the measurement and also high throughput.

Prior art solutions which seek to determine quality of focusing in optical systems, typically related to imaging and sensing applications, usually are based on an iterative protocol that obtains images or signals at different sample positions, followed by an algorithm that optimises for image contrast and/or signal levels. Such an approach typically does not provide a direct quantitative measure to monitor changes in the optical signal over time.

However, in many optical detection schemes, the position of the lens as well as the detectors are fixed without the ability to take images at different positions, as is normally the case with lensed optical fibres.

In such detection schemes the quality of the optical focusing is directly affected by the cleanliness, aberrations and optical quality of surfaces the light passes through as any deviation from a flat phase-front will lead to an increase in the focal spot size, lowering the obtained optical signal and preventing quantitative measurements.

This condition usually leads to integrating a measurement that enables to monitor the quality and degradation of the optical signal over time and that does not require optical imaging.

In many optical engineering applications, this quality and degradation of focusing is described using the M² factor, which provides a measure for how much larger than the diffraction limit the focal spot size is.

This quality factor is typically measured by taking at least five images of a beam diameter emitted by an optical system in different positions along the optical axis, which is not possible in applications without an imaging capability or when light is tightly focused by a lens with a high numerical aperture due to the pixel size of CCD or CMOS based imaging devices being smaller than the focal spot size.

For lenses with a high numerical aperture this quality factor of the focal spot size can be characterised by scanning a single subwavelength size calibration particle through the focal area and collecting the optical scattering at each point where the calibration particle is placed in the focal region. This is a technically demanding, slow and time consuming process that is severely hampered by the limited signal that can be collected from subwavelength sized particles.

As the refractive index contrast for nanoparticulates (<1µm) and other (biological) contaminants with the surrounding sample (if fluidic, forming a solution) is typically small, they are challenging to detect using conventional imaging or scattering approaches, due to the large optical background from the excitation source.

To efficiently remove the light from the excitation source to enable detecting nanoparticulates (<1µm) and biological contaminants at low level typically fluorescent nanoparticles and/or fluorescence imaging approaches are used.

This provides sufficient sensitivity to monitor contaminants to ensure these entities are below the desired detection threshold. However, doing this requires the addition of supplementary, potentially costly, fluorescent entities as well as detection capabilities in those cases where the fundamental detection approach is not fluorescence or imaging based. Moreover, the use of a separate detection capability distinct from the primary method used does not guarantee that no changes occur in the signal over time in the primary signal that is collected by the method.

The solutions of the present disclosure address such issues, enabling a reliable determination of the condition of an optical system, in particular focused on the level of contamination and quality of focus of such optical system, enabling its long term, reliable and reproducible operation.

### SUMMARY OF THE DISCLOSURE

The present disclosure includes an automated method for determining a condition of an optical system, the condition comprising the presence of contamination in the optical system or the quality of focus of the optical system, the optical system comprising means for providing a sample and optical means, and being configured to produce a backscattering or forward scattering signal upon illumination.

The method comprises the steps of:
establishing a baseline signal for such optical system, the baseline signal being a backscattering or forward scattering temporal signal of a predefined duration,
obtaining a present signal with such optical system, the present signal being produced upon illumination of the optical system and consisting of a backscattering or forward scattering temporal signal of a predefined duration,
comparing the present signal with the said baseline signal, and
based on such comparison, determining the condition of the optical system.

The baseline signal may be established from more than one reference signal, the reference signals being backscattering or forward scattering signals and each corresponding to a reference sample provided in the means for providing a sample of the optical system or of an identical optical system.

Establishing a baseline signal may comprise applying at least one metric to each of the reference signals, therefrom extracting at least one feature from each of the reference signals and determining a threshold or an expected value, the comparison between the present signal and the baseline signal comprising comparing the present signal with such threshold or expected value obtained from the reference signals.

The at least one metric applied to each of the reference signals may comprise one or more of voltage peak-to-peak, mean, standard deviation, Skewness, Kurtosis and root mean square (RMS).

The reference samples may be of a clean solvent, such as water, optionally ultrapure water, optionally Milli-Q ultrapure water.

The method may further comprise training a machine learning classifier with the more than one reference signals which are considered to be conform or non-conform with regard to the condition to be determined and, optionally with:
present signals, the present signals corresponding to samples provided in the means for providing a sample defining contaminated and non-contaminated samples, and/or
backscattering or forward scattering signals obtained previously from the same identical optical systems, previously obtained signals corresponding to the same or identical optical systems having corresponding quality focuses which are considered to be conform and quality focuses which are considered to be non-conform.

The machine learning classifier may be a supervised deep learning classifier.

The method may further comprise determining a condition of an optical system upon providing a sample to be analysed in the means for providing the sample and cleaning the optical system or upon providing a sample to be analysed in the means for providing the sample.

Referring to the determination of the presence of contamination in the optical system, it may comprise comparing the present signal with the threshold or expected value obtained from the reference signals by determining how much of the present signal:
is within or outside said threshold, or
deviates from said expected value, and therefrom determining the presence of contamination in the optical system

The threshold may comprise a higher threshold and a lower threshold.

The comparison may correspondingly be performed by determining:
the percentage of the present signal which is within and/or outside said threshold, and comparing said percentage with a predefined percentage, the predefined percentage being obtained from the features extracted from the reference signals, or
a deviation of the present signal from the said expected value, and comparing such deviation with a predefined deviation, the predefined deviation being obtained from the features extracted from the reference signals.

Comparing the present signal with the baseline signal may comprise applying at least one metric to the present signal, thereby extracting at least one feature from the present signal, and comparing such feature extracted from the present signal with the threshold or expected value.

The metric applied to the present signal may be one or more of voltage peak-to-peak, mean, standard deviation, Skewness, Kurtosis and root mean square (RMS).

Referring to the determination of the quality of focus of the optical system, it may comprise obtaining a plurality of present signals from a plurality of corresponding samples and comparing the present signals with the said baseline signal,
each of the corresponding samples and the reference samples comprising a clean solvent, such as water, and nanoparticles subsequently provided in the means for providing a sample.

The clean solvent may be water. Water may be ultrapure water or Milli-Q ultrapure water.

The reference samples containing the clean solvent and nanoparticles may consist of an original sample of clean solvent and nanoparticles and a plurality of dilutions of the original sample in the clean solvent, each dilution having an order corresponding to a lower concentration of nanoparticles as regards the original sample and a prior dilution, and
the current samples containing clean solvent and nanoparticles consist of an original sample of clean solvent and nanoparticles and a plurality of dilutions of the original sample in the clean solvent, each dilution having an order corresponding to a lower concentration of nanoparticles as regards the original sample and a prior dilution,

The clean solvent may be water. Water may be ultrapure water or Milli-Q ultrapure water.

The comparison of the present signal with the baseline signal may comprise extracting at least one feature from the present signals and comparing such extracted features the threshold or expected value obtained from the reference signals.

Establishing a baseline signal for such optical system may comprise:
extracting at least one reference feature from each of the reference signals,
applying a further reference metric to each of the extracted reference features, and therefrom extracting a further reference feature, defining the threshold or expected value, and
the comparison of the present signal with the baseline signal comprises:
extracting at least one present feature from each of the present signals,
applying a further present metric to each of the extracted present features, and therefrom extracting a further present feature,
comparing the further present feature with the threshold or expected value.

The reference feature and the present feature may consist of a value obtained from the metrics of voltage peak-to-peak, mean, standard deviation, Skewness, Kurtosis and root mean square (RMS), the further reference metric and the further present metric consisting of linear regression and the further reference feature and the further present feature consist of a slope obtained from the linear regression, the slope obtained from the further present metric being compared with one or more slopes obtained from the further reference signals.

The present disclosure further comprises a non-transitory storage media including program instructions executable by an electronic processor for implementing the method of the present disclosure.

The present disclosure further comprises a device for determining a condition of an optical system, the condition comprising the presence of contamination in the optical system or the quality of focus of the optical system, the device comprising an electronic processor for implementing the method of the present disclosure.

The present disclosure further comprises an optical system configured to determine an own condition, the condition comprising the presence of contamination in the optical system or the quality of focus of the optical system, the optical system comprising means for providing a sample, optical means and the device of the present disclosure.

The optical system may further comprise:
light emitting means configured to produce illumination consisting of a coherent light beam,
a fibre optic coupler splicing the coherent light beam,
guiding means guiding part of the spliced coherent light beam onto a sample provided on the means for providing a sample,
light acquisition means, configured to respectively obtain a backscattering or forward scattering signal from another part of the spliced coherent light beam.

The coherent light beam may be a laser beam, and the laser beam may be a visible light laser beam or an infrared laser beam.

### DESCRIPTION OF FIGURES

Figure 1 contains a block representation of the method of the present disclosure.
Figure 2 contains examples of baseline signals according to the method of the present disclosure.
Figure 3a contains a schematic representation of an optical system according to the present disclosure.
Figure 3b contains a second schematic representation of an optical system according to the present disclosure.
Figures 4ai, 4aii, 4aiii and 4aiv contain examples of non-contaminated and contaminated signals used to train the machine learning (ML) algorithm.
Figures 4b, 4c and 4d contain representations of a deep learning architecture according to the method of the present disclosure.
Figure 5 contains several plots of present signals as provided in the method of the present disclosure, including a representation of the reasons of such signals which are out of predefined thresholds.
Figure 6a contains a block representation of the method of the present disclosure, with particulars on the determination of the presence of contamination in the optical system.
Figure 6b contains a block representation of the method of the present disclosure, with particulars on the operation of a machine learning classifier.
Figure 7 contains a block representation of the method of the present disclosure, with particulars on the determination of an optical system according to the present disclosure.
Figure 8 contains six examples of backscattered signals obtained when using NIST (National Institute of Standards and Technology) calibrated Polystyrene nanoparticles (NP), in the context of obtaining present signals for determining the quality of focus of an optical system according to the present disclosure.
Figure 9 contains a schematic representation of the dilution process of the present disclosure, for obtaining samples to be provided in the determination of the quality of focus of an optical system according to the present disclosure.
Figure 10 contains a plot which shows the change of slope vs spot size radius for a total of 3 different batches with different initial concentrations and for the number of dilutions defined in Figure 9.
Figure 11 contains a schematic representation of an apparatus which is able to be associated with the optical system of the present disclosure, enabling automated provision of samples into the optical system.
Figure 12 contains a photography of a lensed fibre, a fibre optic, fixedly coupled to means for providing a sample.
Figure 13 contains a block diagram representation of the method of testing the methodology of the present disclosure.

### DETAILED DESCRIPTION

Several configurations of the objects of the present disclosure are described in the Summary of the disclosure. Such configurations are further described below.

The automated method for determining a condition of an optical system of the present disclosure enables that such condition is determined in a fully automated form, only based on data - current signals - obtained from the system.

This allows a reliable determination of the condition of the optical system, in particular on the level of contamination and quality of focus of such optical system, enabling its long term, reliable and reproducible operation.

This is particularly relevant in reusable optofluidic devices, in which light is focused and collected using a focusing element with sensitivity to ensure that signals from contaminants are below the desired detection threshold. The method also does not rely on manual checking and is able to validate the condition of the optical system in a low-resource setting prior to each individual sample measurement.

The presence of contamination may result in determining whether the optical system is contaminated and cannot operate, the results of which being compromised, or is not contaminated and can continue its operation.

The quality of focus may result in determining whether the optical system has a quality of focus which does not allow its continued operation, the results of which being compromised, or has a quality of focus such that it can continue its operation.

Electronically, in case the determination leading to a conclusion that continued operation should not be allowed, such results would lead to electronically flagging that inadequate condition, in an embodiment, the cleaning step may be repeated, and another determination according to the method of the present disclosure performed after such cleaning repetition.

The determination of a condition may refer to only part of the optical system.

Particularly, the optical system may include an element, optical means, which are in contact with the means for providing a sample or in contact with a sample when provided in the means for providing a sample.

The optical means may consist of a focusing element.

Moreover, even when the optical means are not in contact with the means for providing a sample or with a sample when provided in the means for providing a sample, it still may be that the provision of a sample in the means for providing a sample leads to an exposure of the optical means, whereby at least part of the sample contacts and thereby contaminating the optical means.

The optical means may include a fibre optic fixedly coupled to the means for providing a sample.

The fibre optic may form a focusing element of the optical system.

The optical system is further configured to produce a backscattering or forward scattering signal upon illumination.

An example of illumination may include the emission of a coherent light beam into the means for providing a sample, such that a sample provided therein is hit by such coherent light beam.

The provision of such coherent light beam thus produces the backscattering or forward scattering phenomena that correspondingly produce the backscattering or forward scattering signal.

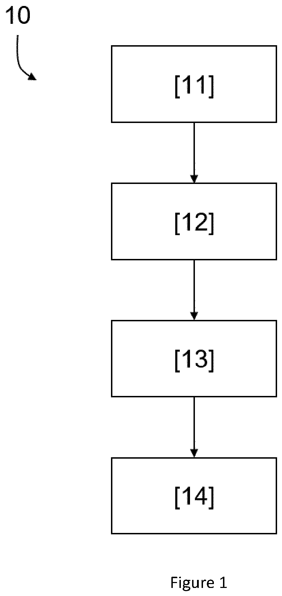

The method [10] comprises the following steps, as represented in Figure 1:
establishing a baseline signal for such optical system, the baseline signal being a backscattering or forward scattering temporal signal of a predefined duration [11],
obtaining a present signal with such optical system, the present signal being produced upon illumination of the optical system and consisting of a backscattering or forward scattering temporal signal of a predefined duration [12],
comparing the present signal with the said baseline signal [13], and based on such comparison, determining the condition of the optical system [14].

By using the present signal of backscattering or forward scattering of the actual optical system, the method of the present disclosure allows to provide a simple and reliable approach at determining the desired condition of the own optical system, without resorting to further equipment or to complex processing.

In addition, the determination of the condition of the optical system provides that the automated method may further perform decision making regarding the need to a) redo a certain measurement of a sample, b) perform additional cleaning of the optical system, or c) replace one or more elements of the optical system.

The optical means of the optical system may comprise or even consist of one or more focusing elements.

Such focusing elements are closer or in contact with the means for providing a sample and, thus, with the actual sample (as previously referred). This leads to potential contamination and impact on the quality of focus, e.g., due to cleaning of such optical elements.

It may be that the focusing element comprises or consists of a fibre optic provided fixedly on the means for providing a sample.

In such case, the focusing element may be permanently in contact with the sample (when a sample is provided on the means for providing a sample).

The fibre optic as focusing element leads light, e.g., resulting in a backscattering of forward scattering signal, towards further optical elements.

Thus, it may be that the optical system contains further elements.

In particular, it may be that the optical system is configured to, in its operation to obtain a signal from a sample to be analysed provided in the means for providing a sample, obtain a backscattering or forward scattering signal of such sample.

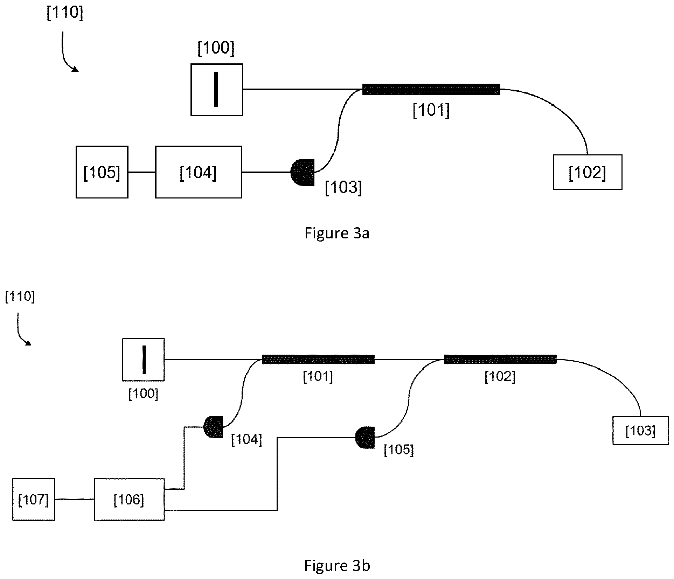

As depicted in Figure 3a, the optical system may thus comprise:
light emitting means configured to produce illumination consisting of a coherent light beam,
a fibre optic coupler splicing the coherent light beam,
guiding means guiding part of the spliced coherent light beam onto a sample provided on the means for providing a sample,
light acquisition means, configured to respectively obtain a backscattering or forward scattering signal from another part of the spliced coherent light beam.

The coherent light beam may, for instance, be a laser beam.

The emitted coherent light beam may be modulated by a predefined modulation frequency.

Further details of the optical system are provided below.

The establishment of a baseline signal corresponds to a calibration stage of the method.

The establishment of a baseline signal may involve obtaining more than one reference signal - a plurality of reference signals -, the reference signals being backscattering or forward scattering signals and each corresponding to a reference sample provided in the means for providing a sample of the optical system or of an identical optical system.

The reference samples may thus be obtained from the actual optical system being analysed or from an identical optical system.

An identical optical system may be defined as an optical system containing the same optical elements as the optical system under analysis through the method of the present disclosure.

Moreover, to do so the condition may be determined based on reference samples provided in the optical system under analysis prior to any sample being provided in such optical system, other than a reference sample.

Alternatively, the condition may be determined based on reference samples provided in an identical optical system prior to any sample being provided in such optical system, other than a reference sample.

In addition, reference signals may be used.

The provision of more reference signals enables a more robust definition of a baseline signal, with which each present signal - the signal being obtained at any stage after calibration - may be compared.

Establishing a baseline signal comprises applying at least one metric to each of the reference signals, therefrom extracting at least one feature from each of the reference signals and determining a threshold or an expected value, the comparison between the present signal and the baseline signal comprising comparing the present signal with such threshold or expected value obtained from the reference signals.

The provision of at least one metric allows to characterise the reference signals and to therefrom obtain relevant information to define a threshold or expected value. Examples of metrics are voltage peak-to-peak, mean, standard deviation, Skewness, Kurtosis and root mean square (RMS).

The example of voltage peak-to-peak is used.

In such case, the voltage peak-to-peak of a plurality of reference signals may be used to determine one or more thresholds. A higher threshold may be defined, as well as a lower threshold. Both may also be defined.

In case of a higher threshold, such threshold may correspond to a threshold below which the optical system is considered to be operating without contamination or with a quality of focus which enables its continued operation.

The present signal may then be obtained and compared with such metric, for instance to determine whether such signals are out of the range defined by such metrics.

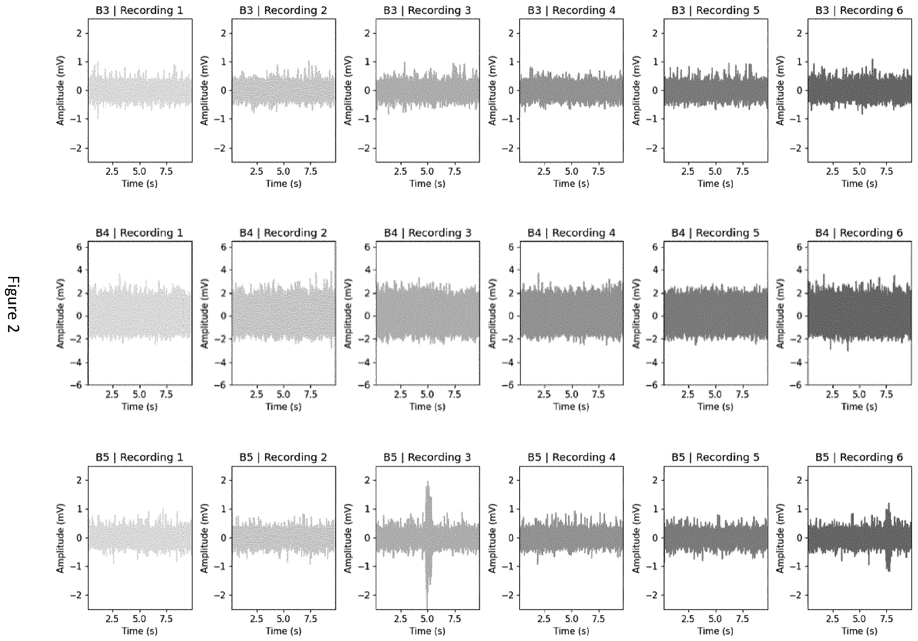

Examples of baseline signals according to the present disclosure are presented in Figure 2.

In such cases, the Y-axis contains data of Amplitude of the voltage signal in mV, over time provided in seconds in the X-axis.

A metric such as the illustrative voltage peak-to-peak can thus be applied.

The reference samples may be of a clean solvent, such as water, optionally ultrapure water, optionally Milli-Q ultrapure water.

In particular, the baseline signals of Figure 2 refer to three different samples of ultrapure - Milli-Q-water, for which six different reference signals were obtained.

Ultrapure water is free from any contaminants that could be detected through the elastic scattering measurements, and thus defines a solid baseline.

Moreover, it is particularly suitable for the determination of contamination in optical systems using biological samples, as the majority of the background of which is typically water.

The method of the present disclosure may involve artificial intelligence, more particularly machine learning, enabling that the comparison and the determination steps are performed by a machine learning classifier.

Prior to such stages, a machine learning classifier is trained with the more than one reference signals which are considered to be conform and non-conform with regard to the condition to be determined and, optionally, with:
present signals, the present signals corresponding to samples provided in the means for providing a sample defining contaminated and non-contaminated samples, and/or
backscattering or forward scattering signals obtained previously from the same identical optical systems, previously obtained signals corresponding to the same or identical optical systems having corresponding quality focuses which are considered to be conform and quality focuses which are considered to be non-conform.

The number of reference signals influences the robustness with the baseline signal, and the corresponding comparison with a present signal.

For instance, the number of reference signals may be higher than 10, 20, 30, 40, 50, 60, 70, 80, 90, 100 or higher. The number of reference signals may specifically be of 96.

Once a baseline signal is set, it may be used during the operational life of an optical system.

The method of the present disclosure may further comprise that the comparison and the determination steps are performed by a machine learning classifier.

Machine learning (ML) is a subfield of artificial intelligence (Al) that focuses on the development of algorithms and statistical models that are aimed at training computer systems to automatically identify patterns, make predictions, or make decisions based on data. ML encompasses itself a vast variety of algorithms that include, for instance, reinforcement learning, convolutional neural networks, random forests, among many others.

The solution of the present disclosure may specifically involve a supervised approach that builds upon existing information, such as backscattering or forward scattering signals previously validated by a human operator as conform or non-conform with the condition, to detect conform/non-conform signals.

The method thus comprises previously training a machine learning classifier, specifically with the more than one reference signals, which are considered to be conform and quality focuses which are considered to be non-conform.

The machine learning classifier may be a supervised deep learning classifier.

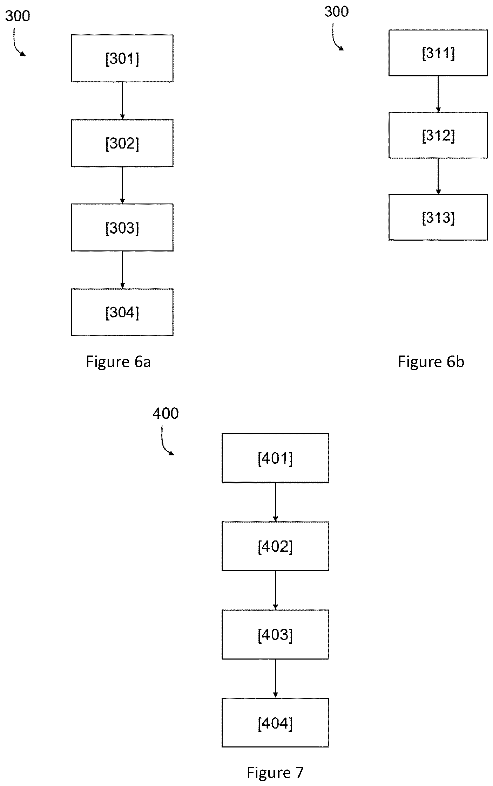

The machine learning classifier may operate according to the representation of Figure 6b, including the steps of:
a. Signal pre-processing, including normalization, filtering, baseline subtraction, and extraction of a plurality of statistical features [311],
b. Performing the comparison of the method of the present disclosure, with pre-trained machine learning classification [312],
c. Decision on the condition by the machine learning classifier [313].

During the training/calibration of the machine learning classifier, a battery of experiments is run, in particular include analysing water or ultrapure water or Milli-Q water before the optical system is exposed to any other material, analysing complex samples - such as complex liquid biological samples (biosamples) - that will potentially contaminate the optical system in the absence of further cleaning protocols applied to the system.

Moreover, backscattering and forward scattering signals are obtained and analysed, for instance for Milli-Q water and right after a certain complex liquid biosamples has been provided in the optical system (in the means for providing a sample), both with and without previous cleaning.

An exhaustive dataset for the baseline signal is thus generated, based on signals from measurements in clean Milli-Q water as well as signals from measurements with contaminated Milli-Qwater.

These signals may then be classified into groups of (i) conform and (ii) non-conform subsequently being used, based on such information, to train a machine learning classifier, which may be a deep learning algorithm.

Particularly, while training for determining a condition consisting of the presence of contamination in the optical system, a conform signal corresponds to non-contaminated, while a non-conform signal corresponds to contaminated.

While training for determining a condition consisting of the quality of focus of the optical system, a conform signal corresponds to a quality focus which is considered to be conform, while a non-conform signal corresponds to a quality focus which is considered to be non-conform.

Figure 7 presents an example of classification of the presence of contamination in an optical system according to the shape of the signal acquired.

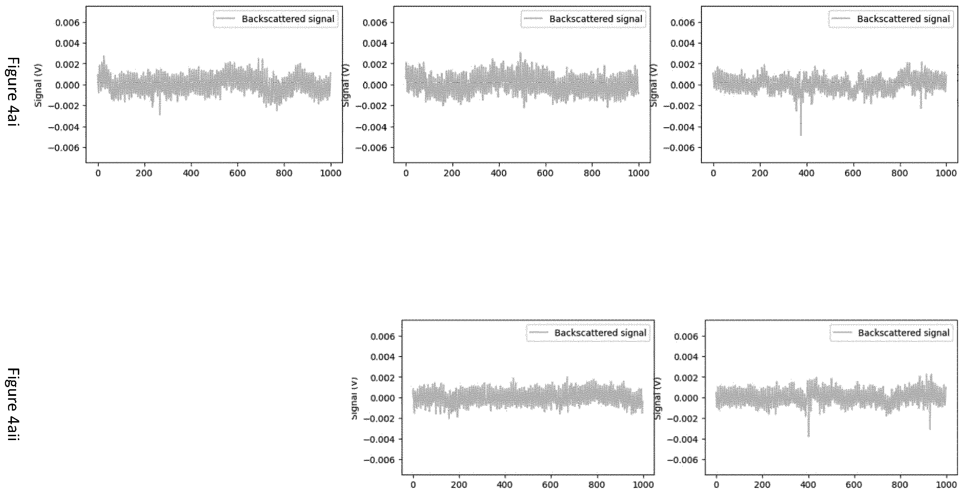

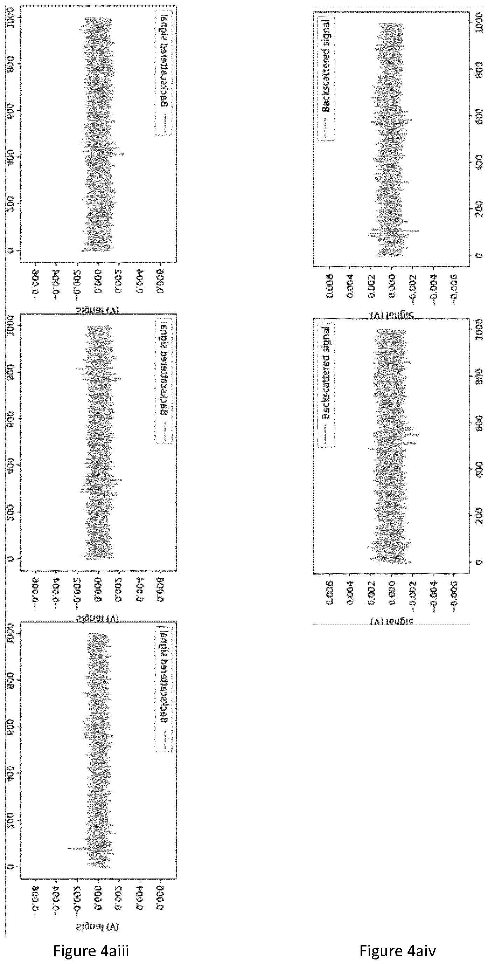

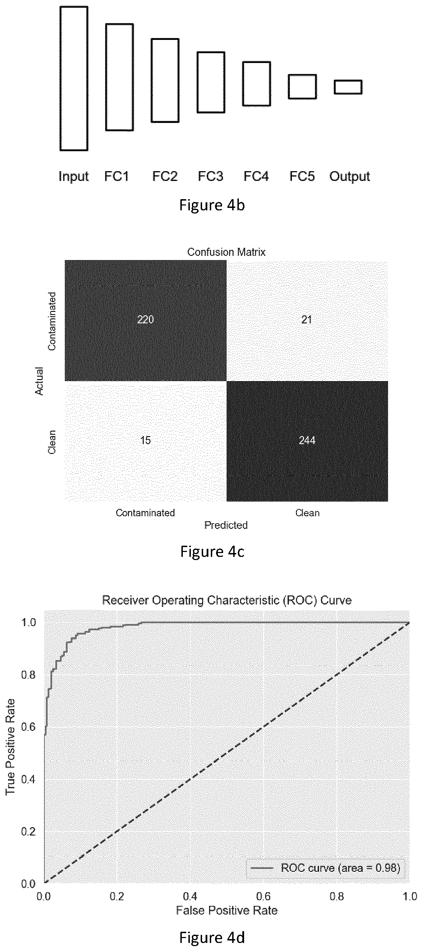

Examples of non-contaminated and contaminated signals used to train the ML algorithm are shown in Figures 4ai, 4aii, 4aiii and 4aiv.

The present solution is not limited to the machine learning algorithm described herein, although it is particularly advantageous. Moreover, the validity of a supervised learning approach for detecting contamination in the optical system by transforming the problem into a binary classification task is herein represented.

As referred, Figures 4ai, 4aii, 4aiii and 4aiv contain (raw) backscattered signals used to train the machine learning classifier.

Figure 4b presents a deep learning architecture, in which the input contains 1000 elements, and where there are five fully connected (FC) layers. FC1 has 256 neurons, FC2 128 neurons, FC3 64 neurons, FC4 28 neurons and FC5 16 neurons: [256, 128, 64, 32, 16]. After each FC layer a rectified linear unit (ReLu) activation function may be provided, except before the output, where a sigmoid activation function may be used. The output may have dimensionality 1 and can be either 0 (non-contaminated/clean or quality of focus conform) or 1 (contaminated/not clean or quality of focus non-conform).

Figure 4c presents a confusion matrix corresponding to the illustrative machine learning classifier model.

Figure 4d presents a corresponding receiver operating characteristic (ROC) curve.

As previously referred, the optical system is configured such that samples to be analysed with such system are provided on the means for providing a sample. The optical means of the optical system may thus be exposed to the sample and contaminated, leading to a need of cleaning. Moreover, the continued cleaning may lead to a reduction of the quality of focus of the optical system.

Therefore, the condition of an optical system may be determined upon providing a sample to be analysed in the means for providing the sample and cleaning the optical system.

In such case, the condition of the optical system is determined immediately after it has been used for analysing a sample -thereby potentially contaminated or degraded.

Referring to the determination of the presence of contamination in the optical system.

As previously described, determining the presence of contamination in the optical system comprises comparing the present signal with the threshold or expected value obtained from the reference signals.

An example thus consists of determining if the present signal is within or without the threshold.

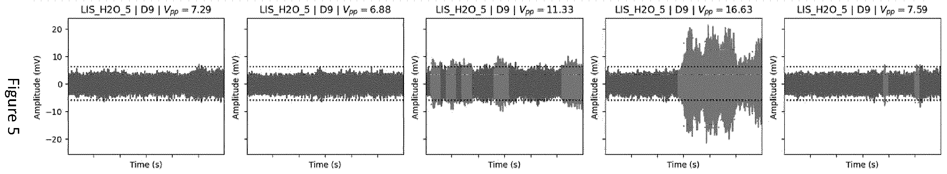

In a further advantageous embodiment, depicted in Figure 5, a measure of how much the present signal overcomes the threshold. Particularly, it may be determined how much of the present signal:
is within or outside said threshold, or
deviates from said expected value,
and therefrom determining the presence of contamination in the optical system.

In Figure 5, several illustrative present signals (backscattering signals, Milli-Q ultrapure water) are represented. The dotted lines characterise voltage peak-to-peak represent a higher or upper threshold and a lower threshold automatically defined by the method of the present disclosure and representing the baseline signal.

Dotted lines characterise the voltage peak-to-peak (VPP) thresholds that were defined during the calibration phase as acceptable. Lighter grey sections are outliers.

The two signals on the right only slightly overcomes the upper threshold, in a measure considered to be low and thus representing an optical system with a conform condition.

The middle signal and the two signals on the right overcome in several points both the upper and the lower thresholds (regions in lighter grey).

Particularly, such measure of how much of a signal overcomes a threshold may be determined as a percentage, particularly:
the percentage of the present signal which is within and/or outside said threshold, and comparing said percentage with a predefined percentage, the predefined percentage being obtained from the features extracted from the reference signals, or
a deviation of the present signal from the said expected value, and comparing such deviation with a predefined deviation, the predefined deviation being obtained from the features extracted from the reference signals.

The percentage of the present signal that is flagged as outside the thresholds that can be acceptable may also be defined. An example may be of a percentage lower than a given number, such as lower than 5%, outside the thresholds.

The method of the present disclosure, illustrated in Figure 6a, while determining the presence of contamination in the optical system may thus comprise the steps of:
a. establishing a baseline signal by defining one or more thresholds,
b. obtaining a present signal with the optical system,
c. comparing the present signal with the said baseline signal defined by one or more thresholds, the comparison including extracting one or more features from the present signal and estimating a percentage of the present signal which is outside of the threshold or thresholds,
d. based on the comparison, determining the condition of the optical system, particularly determining whether the optical system is contaminated or non-contaminated.

Accordingly, comparing the present signal with the baseline signal may comprise applying at least one metric to the present signal, thereby extracting at least one feature from the present signal, and comparing such feature extracted from the present signal with the threshold or expected value.

The metric applied to the present signal is one or more of voltage peak-to-peak, mean, standard deviation, Skewness, Kurtosis and root mean square (RMS).

Referring to the determination of the quality of focus of the optical system.

Determining the quality of focus of the optical system may comprise obtaining a plurality of present signals from a plurality of corresponding samples and comparing the present signals with the said baseline signal,
each of the corresponding samples and the reference samples comprising a clean solvent (e.g., water) and nanoparticles subsequently provided in the means for providing a sample, the water optionally being ultrapure water or Milli-Q ultrapure water.

The quality of optical focussing, which may include a level of degradation of the optical system due to cleaning (as an example) may be referred to as being analysed based on the total amount of collected light of the backscattering or forward scattering signal.

To enable monitoring of the focus quality and optical surface degradation, the method of the present disclosure may further include obtaining present signals from corresponding present samples, to be compared with the baseline signal, where such corresponding present samples contain not only water or ultrapure water or Milli-Q water, but also nanoparticles in suspension in such clean solvent (e.g., water).

Figure 7 illustrates such procedure.

Particularly, usage of these corresponding present samples are based on the fact that the amount of optical scattering of nanoparticles in an optical focus scales with their size, concentration, refractive index, optical wavelength as well as the local strength of the optical field in the focus based on Mie Scattering Theory.

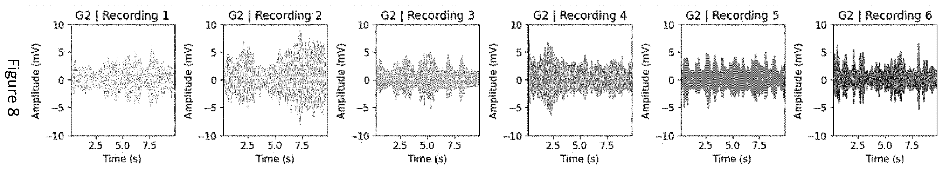

Figure 8 contains six examples of backscattered signals obtained when using NIST (National Institute of Standards and Technology) calibrated Polystyrene nanoparticles (NP) (an illustrative example).

Backscattering or forward scattering signals according to the present disclosure may have different temporal durations and sampling frequencies.

As an example, 30s of signal together with 50kHz of sampling rate may be applied.

In addition, the calibration of NIST calibrated nanoparticles provides that only the size of the NP is calibrated, not their concentration.

A set of measurements - obtaining present signals - may thus be performed to determine the quality of focus, based on the same sized nanoparticles in which the calibration sample is diluted by known steps to make the measurements independent of the exact concentration used.

As a result, comparing these control measurements against theory and/or baseline measurements for the specific optical system used provides a method to automatically monitor the quality of optical focusing throughout long-term optical measurements.

Other nanoparticle materials, sizes or even mixtures of NP materials and NP sizes during these control measurements may be used.

Thereby, the reference samples containing the clean solvent and nanoparticles may consist of an original sample of the clean solvent and nanoparticles and a plurality of dilutions of the original sample in the clean solvent, each dilution having an order corresponding to a lower concentration of nanoparticles as regards the original sample and a prior dilution.

In addition, the current samples containing the clean solvent and nanoparticles may consist of an original sample of clean solvent and nanoparticles and a plurality of dilutions of the original sample in the clean solvent, each dilution having an order corresponding to a lower concentration of nanoparticles as regards the original sample and a prior dilution.

The clean solvent may be water. Water may be ultrapure water or Milli-Q ultrapure water.

The reduction of quality of focus of an optical system (e.g. due to degradation of optical surfaces) as well as contaminations, lead to an increase in the focal spot size due to changes in the optical phase of the optical beam. Thus, it is expected that the collected signal will degrade over time due to the reduction in the maximum optical field strength and increase in focal spot size, as can be determined by the M² factor, while all other relevant parameters remain unchanged.

Thus, monitoring the optical signal from NPs over time and comparing against the established baseline will enable the monitoring of the degradation of the optical system, thus enabling monitoring of its lifetime.

The method of the present disclosure thus includes obtaining a plurality of present signals, measurements of backscattered or forward scattered signals, using multiple samples of nanoparticles, for instance synthetic NPs with NIST-traceable size, each of the samples at a different concentration.

While size can be very well controlled and certified, sample concentration is an extremely challenging quantity to assess. As a consequence, the method of the present disclosure, while determining quality of focus, is insensitive to concentration, by generating a series of sample dilutions from an original batch at a concentration that does not need to be exactly known.

The comparison of the present signal with the baseline signal may comprise extracting at least one feature from the present signals and comparing such extracted feature or features with the threshold or expected value obtained from the reference signals.

Moreover, establishing a baseline signal for such optical system may comprise:
extracting at least one reference feature from each of the reference signals,
applying a further reference metric to each of the extracted reference features,
and therefrom extracting a further reference feature, defining the threshold or
expected value, and
the comparison of the present signal with the baseline signal comprises:
   extracting at least one present feature from each of the present signals,
   applying a further present metric to each of the extracted present features, and
   therefrom extracting a further present feature,
   comparing the further present feature with the threshold or expected value.

Each of the samples (including the original, non-diluted, one) are passed through the optical system, and the corresponding backscattered or forward signal may be obtained.

Subsequently, features - present features - of the present signal can be extracted and a comparison between the obtained metrics - present metrics - with the metrics obtained during the calibration phase of baseline signal establishment of the optical system, and an assessment of the quality of focus of the optical system is provided.

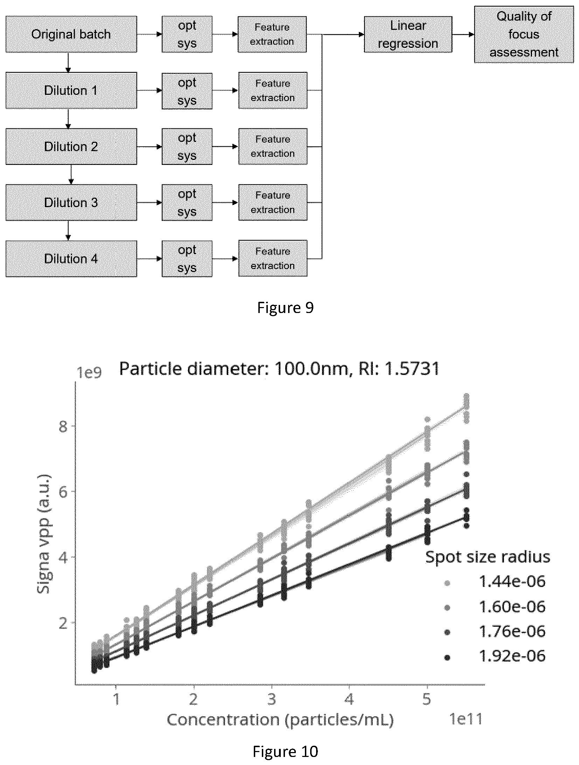

This process is illustrated in Figure 9 for the case of 4 dilutions of the original NP batch and a linear regression as the mapping algorithm.

In this particular case, the signal voltage peak-to-peak (VPP) has been defined as the metric of interest.

Moreover, changes in the slope of a linear regression between VPP values and the different concentration levels are used to determine changes in the quality of the focusing, which is assessed here as a change in the focus spot size.

The plot in Figure 10 (obtained via numerical simulations of the light matter interaction process) shows the change of slope vs spot size radius for a total of 3 different batches with different initial concentrations. A single batch could be used.

This methodology enables to determine the quality of focusing using an ensemble of nanoparticles. Using four sample dilutions, signal VPP as a feature, and linear regression as a metric to be fit is an illustrative example of the present disclosure.

The method of the present disclosure refers to the determination of a condition of an optical system.

An optical system is also an object of the present disclosure, in particular an optical system which comprises the device of the present disclosure, which in turn is configured to implement the method of the present disclosure.

The optical system may comprise:
light emitting means configured to produce illumination consisting of a coherent light beam,
a fibre optic coupler splicing the coherent light beam,
guiding means guiding part of the spliced coherent light beam onto a sample provided on the means for providing a sample,
light acquisition means, configured to respectively obtain a backscattering or forward scattering signal from another part of the spliced coherent light beam.

The light emitting means configured to produce illumination consisting of a coherent light beam may be such that the coherent light beam is a laser beam.

The light acquisition means may comprise the optical means prone to be exposed to a sample to be analysed with the optical system, when the sample is provided in the means for providing a sample.

The light acquisition means may thus comprise optical means which in turn comprise a focusing element.

It may be that focusing element comprises a fibre optic which acts as a focusing element.

The fibre optic may be fixedly coupled to the means for providing a sample, and thereby guide a backscattering or forward scattering signal produced upon illumination of the sample towards other elements of the light acquisition means.

As provided in Figure 3a, the optical system may include a light emitting means, a fibre optic coupler, a photodetector, and a lensed fibre that is inserted in means for providing a sample which may comprise a sample of interest - such as a fluidic sample of interest. The lensed fibre may thus be part of the light acquisition means which may also be referred to as a sample analysis device (SAD). A data acquisition board is also included in the setup to digitise the analogue voltages from the photodetector.

In detail, the light emitting means [100] are connected to one input of a 50:50 fibre optic coupler with a 1x2 configuration [101]. Its input is spliced into the optical fibre of the SAD [102] to guide light into the lensed fibre probe and to acquire the backscattered signal from the sample, through a silicon amplified photodetector [103], which is coupled to the second output of the 50:50 fibre optic coupler [101]. The photodetector is connected to a data acquisition board [104] to acquire the backscattered signal from the SAD and send them to a workstation [105] for analysis.

Alternative configurations can be implemented. Another example is provided in Figure 3b, a 99:1 fibre optic coupler [106] with a 1x2 configuration can be used to monitor the signal from the light source, through a second photodetector [107] or a conventional lens focused into an optically transparent container or microfluidic channel can be used to form the SAD.

In an embodiment, the laser may be modulated by a modulation frequency, in particular modulated as a function of time, by modulating the optical power.

Alternatively, the laser may also not be modulated.

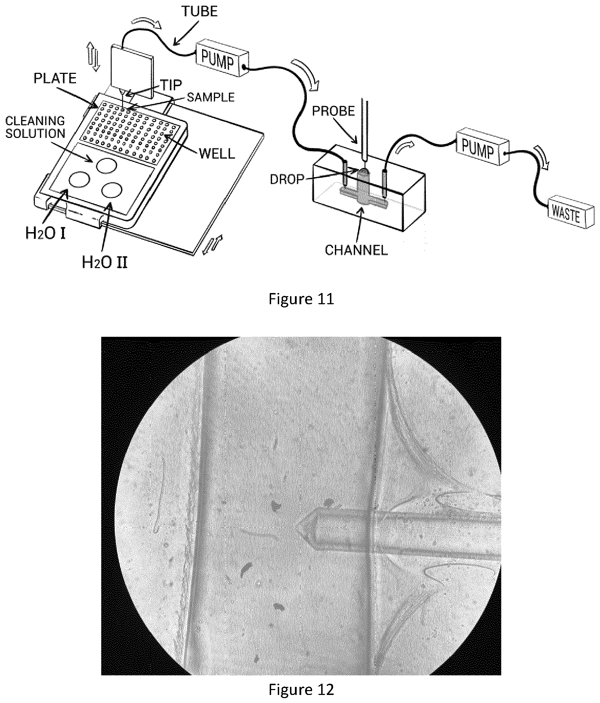

The optical system of the present disclosure may be associated with an apparatus for providing samples into the means for providing a sample in an automated fashion, as depicted in Figure 11.

The apparatus may be such that samples are fluidic samples provided in an n-well plate, n being an integer larger than 1, typically equal or larger than 6, 12, 24, 48, 96, 384.

Each sample may be pumped through a tip of a tube under the action of a first pump and dripped into the means for providing a sample.

A fibre optic is fixedly provided into the means for providing a sample.

A second tube associated with a second pump may then remove the sample from the means for providing a sample towards waste.

The plate may further contain cleaning solutions with water, to clean the whole set after a sample has been analysed.

Figure 12 shows a photography of a lensed fibre, a fibre optic, fixedly coupled to means for providing a sample.

### RESULTS

To produce an illustrative result of the enhanced performance of the method of the present disclosure, the machine learning classifier was trained with 5,000 contaminated backscattering signals and 5,000 non-contaminated backscattering signals. Adam was used as an optimiser, the results of 99.8% accuracy, 98% AUROC, 91% sensitivity, 93% specificity were achieved, as shown in Figures 4c and 4d.

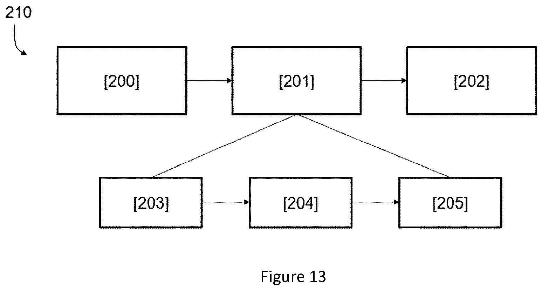

The performance of the proposed method for characterising SAD cleanliness and quality of focus (including degradation) was tested via a series of experiments, depicted in Figure 13.

After each measurement on a sample [200], the SAD is subjected to a cleaning procedure [201], and after, the backscattered signal in Milli-Q water [202] is measured. The cleaning procedure was comprised of three steps: first, the SAD is rinsed with distilled water [203]; second, the SAD is rinsed with a neutral detergent solution [204]; and third, the SAD is rinsed with distilled water [205]. Depending on the measured samples, the detergent solution can be left to act over a period of time, and it can be shifted back and forth while acting. The cleaning procedure can be repeated an arbitrary number of times (typically 2 but not restricted to that).

These experiments aimed at assessing the variation and quality of the backscattered signal after cyclically exposing the SAD to different samples and cleaning routines. The outputs of the experiments allow a) determining cleanliness of the SAD by comparing signals obtained from Milli-Q measurements, after contamination and cleaning, to the previously established baseline; and b) evaluate the quality of optical focusing by monitoring backscattered signal of calibration samples over time.

For the purpose of this experiment, the samples used are contaminating media as well as calibration standards, used to simultaneously evaluate the quality of focussing and to contaminate the SAD prior to cleaning.

These samples included:
- Polystyrene (PS) nanoparticles diluted in Milli-Q - diameters: 50 nm, 80 nm, 100 nm, 200 nm
- Polymethyl Methacrylate (PMMA) nanoparticles diluted in Milli-Q - diameters: 50 nm, 80 nm, 100 nm, 200 nm
- Silica (SiO2) nanoparticles diluted in Milli-Q - diameters: 50 nm, 80 nm, 100 nm, 200 nm
- Phosphate-buffered saline (PBS) spiked with proteins
- Foetal bovine serum (FBS)
- Exosome-depleted Foetal bovine serum
- Synthetic human serum, pathological and non-pathological
- Human pooled serum and plasma, non-pathological
- Human pooled serum and plasma, non-pathological, spiked with proteins
- Liposomes diluted in Milli-Q and diluted in 50 mM Tris-HCl, 500 mM NaCl, 75 mM KCI
   ∘ 100 nm, concentrations ranging from 10^8 to 10^11
   ∘ Empty, with 70 kDa protein in the membrane, with 200 kDa protein in the membrane, with 100 mg/mL glucose, with 200 mg/mL glucose
- Mixtures of 100 nm and 200 nm liposomes, concentration 10^11, empty and with glucose (100 mg/mL and 200 mg/mL), empty and with proteins, with concentration ratios varying between 10:90 and 90:10

For the cleaning procedure, the following detergents were tried:
- Hydrogen peroxide 10V (3% + stabiliser)
- Ethanol 96%
- Methanol
- Extran^{®} MA 02 Liquid Detergent for Manual Washing, MilliporeSigma (in a concentration less than or equal to 5%, optimal between 2% and 5%)
- Store bought bleach

Although the present disclosure is mainly described in terms of methods and systems, the person skilled in the art understands that it is also directed to various devices or apparatuses, which may include one or more computational devices, installed locally or remotely.

For instance, the automated method of the present disclosure may be implemented by an electronic or computational device installed locally or remotely.

The device of the present disclosure, by being configured to implement the method of the present disclosure, thereby comprises an electronic or computational device, being installed locally or remotely.

The device may include components to perform at least some of the example features and features of the methods described, whether through hardware components (such as memory and / or processor), software or any combination thereof.

An article for use with the device, such as a pre-recorded storage device or other similar computer-readable medium, including program instructions recorded on it, or a computer data signal carrying readable program instructions computer can direct a device to facilitate the implementation of the methods described herein. It is understood that such apparatus, articles of manufacture and computer data signals are also within the scope of the present disclosure.

A "computer-readable medium" means any medium that can store instructions for use or execution by a computer or other computing device, including read-only memory (ROM), erasable programmable read-only memory (EPROM) or flash memory, random access memory (RAM), a portable floppy disk, a drive hard drive (HDD), a solid state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

1. An automated method for determining a condition of an optical system, the condition comprising the presence of contamination in the optical system or the quality of focus of the optical system, the optical system comprising means for providing a sample and optical means, and being configured to produce a backscattering or forward scattering signal upon illumination, the method comprising the steps of:
establishing a baseline signal for such optical system, the baseline signal being a backscattering or forward scattering temporal signal of a predefined duration,
obtaining a present signal with such optical system, the present signal being produced upon illumination of the optical system and consisting of a backscattering or forward scattering temporal signal of a predefined duration,
comparing the present signal with the said baseline signal, and
based on such comparison, determining the condition of the optical system.

2. A method according to claim 1 wherein the baseline signal is established from more than one reference signal, the reference signals being backscattering or forward scattering signals and each corresponding to a reference sample provided in the means for providing a sample of the optical system or of an identical optical system.

3. A method according to the previous claim wherein establishing a baseline signal comprises applying at least one metric to each of the reference signals, therefrom extracting at least one feature from each of the reference signals and determining a threshold or an expected value, the comparison between the present signal and the baseline signal comprising comparing the present signal with such threshold or expected value obtained from the reference signals,
and, optionally, the at least one metric applied to each of the reference signals comprises one or more of voltage peak-to-peak, mean, standard deviation, Skewness, Kurtosis and root mean square (RMS).

4. A method according to any of the claims 2-3 wherein the reference samples are of a clean solvent, such as water, optionally ultrapure water, optionally Milli-Q ultrapure water.

5. A method according to any of the claims 2-4 wherein it further comprises training a machine learning classifier with the more than one reference signals which are considered to be conform and quality focuses which are considered to be conform and non-conform with regard to the condition to be determined and, optionally, with:
present signals, the present signals corresponding to samples provided in the means for providing a sample defining contaminated and non-contaminated samples, and/or
backscattering or forward scattering signals obtained previously from the same identical optical systems, previously obtained signals corresponding to the same or identical optical systems having corresponding quality focuses which are considered to be conform and quality focuses which are considered to be non-conform,
and, optionally, the machine learning classifier is a supervised deep learning classifier.

6. A method according to any of the preceding claims wherein it comprises determining a condition of an optical system upon providing a sample to be analysed in the means for providing the sample and cleaning the optical system or upon providing a sample to be analysed in the means for providing the sample.

7. A method according to any of the preceding claims while depending of claim 3 wherein determining the presence of contamination in the optical system comprises comparing the present signal with the threshold or expected value obtained from the reference signals by determining how much of the present signal:
is within or outside said threshold, or
deviates from said expected value,
and therefrom determining the presence of contamination in the optical system, optionally the threshold comprising a higher threshold and a lower threshold and, optionally, the said comparison correspondingly being performed by determining:
the percentage of the present signal which is within and/or outside said threshold, and comparing said percentage with a predefined percentage, the predefined percentage being obtained from the features extracted from the reference signals, or
a deviation of the present signal from the said expected value, and comparing such deviation with a predefined deviation, the predefined deviation being obtained from the features extracted from the reference signals.

8. A method according to claim 7 wherein comparing the present signal with the baseline signal comprises applying at least one metric to the present signal, thereby extracting at least one feature from the present signal, and comparing such feature extracted from the present signal with the threshold or expected value,
and, optionally, the metric applied to the present signal is one or more of voltage peak-to-peak, mean, standard deviation, Skewness, Kurtosis and root mean square (RMS).

9. A method according to any of the claims 1- wherein determining the quality of focus of the optical system comprises obtaining a plurality of present signals from a plurality of corresponding samples and comparing the present signals with the said baseline signal,
each of the corresponding samples and the reference samples comprising a clean solvent, such as water, and nanoparticles subsequently provided in the means for providing a sample, the water optionally being ultrapure water or Milli-Q ultrapure water.

10. A method according to the previous claim wherein the reference samples containing the clean solvent and nanoparticles consist of an original sample of clean solvent and nanoparticles and a plurality of dilutions of the original sample in the clean solvent, each dilution having an order corresponding to a lower concentration of nanoparticles as regards the original sample and a prior dilution, and the current samples containing clean solvent and nanoparticles consist of an original sample of clean solvent and nanoparticles and a plurality of dilutions of the original sample in clean solvent, each dilution having an order corresponding to a lower concentration of nanoparticles as regards the original sample and a prior dilution,
the clean solvent being optionally water, optionally being ultrapure water or Milli-Q ultrapure water.

11. A method according to claim 3 and any of the claims 9-101 wherein the comparison of the present signal with the baseline signal comprises extracting at least one feature from the present signals and comparing such extracted features the threshold or expected value obtained from the reference signals.

12. A method according to claim 11 wherein
establishing a baseline signal for such optical system comprises
extracting at least one reference feature from each of the reference signals,
applying a further reference metric to each of the extracted reference features, and therefrom extracting a further reference feature, defining the threshold or expected value, and
the comparison of the present signal with the baseline signal comprises:
extracting at least one present feature from each of the present signals,
applying a further present metric to each of the extracted present features, and therefrom extracting a further present feature,
comparing the further present feature with the threshold or expected value,
and, optionally, the reference feature and the present feature consist of a value obtained from the metrics of voltage peak-to-peak, mean, standard deviation, Skewness, Kurtosis and root mean square (RMS), the further reference metric and the further present metric consist of linear regression and the further reference feature and the further present feature consist of a slope obtained from the linear regression, the slope obtained from the further present metric being compared with one or more slopes obtained from the further reference signals.

13. A non-transitory storage media including program instructions executable by an electronic processor for implementing the method of any of the preceding claims.

14. A device for determining a condition of an optical system, the condition comprising the presence of contamination in the optical system or the quality of focus of the optical system, the device comprising an electronic processor for implementing the method of any of the claims 1-12.

15. An optical system configured to determine an own condition, the condition comprising the presence of contamination in the optical system or the quality of focus of the optical system, the optical system comprising means for providing a sample, optical means and the device of claim 14.

16. An optical system according to the previous claim and further comprising:
light emitting means configured to produce illumination consisting of a coherent light beam,
a fibre optic coupler splicing the coherent light beam,
guiding means guiding part of the spliced coherent light beam onto a sample provided on the means for providing a sample,
light acquisition means, configured to respectively obtain a backscattering or forward scattering signal from another part of the spliced coherent light beam,
and, optionally, the coherent light beam is a laser beam, optionally the laser being a visible light laser or an infrared laser.
